# EUROPEAN PATENT APPLICATION

(11) **EP 2 199 364 A2**
(43) Date of publication of application: **23.06.2010**
(21) Application number: 08171256.4
(22) Date of filing: 10.12.2008
(51) Int. Cl.: C10B 49/02, C10B 49/16, C10B 53/02

(54) **Counter-current process for biomass conversion**

(71) Applicant: KiOR, Inc., Pasadena, TX 77507 (US)
(72) Inventor: O'Connor, Paul, 3871 KM HOEVELAKEN (NL); Daamen, Sjoerd, 08017 BARCELONA (NL)
(74) Representative: Keller, Günter

(57) **Abstract**

A countercurrent process is disclosed for converting solid biomass material. The solid biomass material travels through a reactor system in countercurrent with hot heat carrier materials, such as particulate heat carrier material and hot gases. The solid biomass material is subjected to a first conversion at a first temperature T₁, and a second conversion at a second temperature, T₂, such that T₂ > T₁. Bio-oil produced to at T₁ is not exposed to the higher temperature T₂. As a result, secondary reactions of the bio-oil components are minimized.

## Description

### BACKGROUND OF THE INVENTION

### 1. Field of the Invention

The invention relates generally to the conversion of biomass material, and more particularly to the catalytic conversion of biomass material to liquid fuel products.

### 2. Description of the Related Art

Several pyrolysis processes have been proposed for the conversion of biomass material to liquid and gaseous products. It is generally recognized that in particular the liquid pyrolysis products, often referred to as bio-oil, are unstable. For this reason it is important to minimize the exposure of bio-oil to elevated temperatures.

Flash pyrolysis processes have been proposed in a number of variants. The main characteristics that such processes have in common are as follows. Biomass material is introduced into a hot reaction chamber, with or without a particulate heat carrier material. If a heat carrier material is used, this material may be an inert material, a catalytic material, or a combination of the two. An inert gas is used to remove the vaporized and gaseous reaction products from the reaction chamber, by volume replacement. The vaporized reaction products and the gaseous reaction products are entrained in the inert gas flow to a condensor, where the vaporized reaction products are condensed to liquid form, and separated from the inert gas stream and from the gaseous reaction products.

Although the residence time of the reaction products in the reaction chamber may be short (residence times of less than 1 second are claimed by most authors), the reaction products remain at a high temperature until they reach the condensor. Consequently there is considerable opportunity of secondary reactions taking place with the unstable bio-oil components. This problem is aggravated by the fact that, in order to obtain acceptable yields, the reaction chamber is kept at a high temperature, typically at or near 500°C.

Thus, there is a particular need for a conversion process for biomass material in which exposure of reaction products of the conversion reaction to elevated temperatures is reduced as compared to prior art flash pyrolysis processes.

### BRIEF SUMMARY OF THE INVENTION

The present invention addresses these problems by providing a countercurrent process for the catalytic conversion of biomass material, said process comprising the steps of:
(i) providing a solid particulate biomass material;
(ii) heating the biomass material to a first temperature, T₁;
(iii) contacting the biomass material in countercurrent with a hot gas and/or a hot particulate heat carrier material to provide a second temperature T₂, whereby T₂ > T_{1.}

Another aspect of the invention is a bio-oil produced by this countercurrent process.

### BRIEF DESCRIPTION OF THE DRAWINGS

The features and advantages of the invention will be appreciated upon reference to the following drawings, in which:

FIG. 1 is a schematic representation of a prior art flash pyrolysis unit;

FIG. 2 is a schematic representation of a first embodiment of the process of the invention;

FIG. 3 is a schematic representation of a variant of the embodiment of Figure 2;

Fig. 4 is a schematic representation of a second embodiment of the process of the invention;

Fig. 5 is a schematic representation of a third embodiment of the process of the invention.

DETAILED DISCLOSURE OF THE INVENTION

The present invention relates to a countercurrent process for the catalytic conversion of biomass material, said process comprising the steps of:
(i) providing a solid particulate biomass material;
(ii) heating the biomass material to a first temperature, T₁;
(iii) contacting the biomass material in countercurrent with a hot gas and/or a hot particulate heat carrier material to provide a second temperature T₂, whereby T₂ > T₁.

An essential aspect of the invention is that an important part of the biomass conversion reaction takes place at the lower temperature, T₁, and that reaction products formed at this temperature are not exposed to the higher temperature T₂. Biomass material that is not converted at the lower temperature T₁ is later exposed to the higher temperature, T₂, for further conversion. T₁ and T₂ generally differ by 50 to 200 °C.

In one embodiment of the invention step (ii) comprises mixing the solid particulate biomass material with a hot heat carrier material. During step (ii) and during later stages of the process, coke and/or char deposits on the heat carrier material. In a preferred embodiment the coke and char deposits are burned off the particulate heat carrier material in a regenerator. The combustion heat of the coke and char is used to supply the necessary reaction heat to the heat carrier material.

The particulate heat carrier material may be an inert material, such as sand, or it may be a catalytic material. The term "catalytic material" as used herein refers to a material that, by virtue of its presence in the reaction zone, affects at least one of the process parameters conversion yield and product distribution, without itself being consumed in the reaction. Examples of catalytic materials include the salts, oxides and hydroxides of the alkali metals and the earth alkaline metals, alumina, alumino-silicates, clays, hydrotalcites and hydrotalcite-like materials, ash from the biomass conversion process, and the like. Mixtures of such materials may also be used.

The term "hydrotalcite" as used herein refers to the hydroxycarbonate having the empirical formula Mg₆Al₂(CO₃)(OH)₁₆ •xH2O, wherein x is commonly 4. The term "hydrotalcite-like material" refers to materials having the generalized empirical formula M(II)₆M(III)₂(CO₃)(OH)₁₆ •xH2O, wherein M(II) is a divalent metal ion, and M(III) is a trivalent metal ion. These materials share the main crystallographic properties with hydrotalcite *per se.*

The particulate biomass material may be contacted with a catalyst prior to step (ii), during step (ii), or both prior to and during step (ii). For example, if the catalyst is a watersoluble material, as is the case with the alkali metal and earth alkaline metal compounds, the catalyst may be dissolved in an aqueous solvent, and the biomass material may be impregnated with the aqueous solution of the catalyst prior to step (ii).

The catalyst may be in a particulate form. A particulate solid catalyst can be contacted with the particulate biomass material prior to step (ii) in a separate mechanical treatment step. Such mechanical treatment may include milling, grinding, kneading, etc., of a mixture of the particulate biomass material and the particulate catalyst material.

A catalyst material in particulate solid form can be contacted with the particulate biomass material during step (ii). In a preferred embodiment, the heat carrier material consists of or comprises the particulate solid catalyst.

Char and coke deposit on the particulate heat carrier material. Inorganic materials present in the particulate biomass starting material are converted to ash during the conversion reaction. The process of the invention produces a solid by-product consisting predominantly of the particulate heat carrier material, which may comprise, or consist of, solid catalyst material, coke, char, and ash. Although char may itself be liquid, when deposited on particulate solid materials it can be considered a solid by-product of the process.

In a preferred embodiment these solid by-products are subjected to a high temperature and an oxygen-containing atmosphere (such as air) in a regenerator. Char and coke are combusted, and heat generated hereby is used to increase the temperature of the heat carrier material. This heat is transported back into the process of the invention.

The main reaction products of the process are vaporized liquids, i.e., condensable gases, and gaseous reaction products. The condensable gases and the gaseous reaction products are entrained by the hot gas of step (iii) to a first condensor, where at least part of the condensable gases are converted to a liquid.

Non-condensable gas emanating from the condensor my be combusted to produce a hot flue gas. The hot flue gas can be used as the hot gas with which the biomass material is contacted in step (iii) of the process. Excess heat from this combustion process can be used to heat the heat carrier material. Flue gas from the regenerator can also be used as the hot gas with which the biomass material is contacted in step (iii) of the process.

It is desirable to provide a hot gas for use in step (iii) that has reducing properties. This can be accomplished by operating the regenerator and/or the combustion of the non-condensable gases in such a way as to produce a flue gas containing a significant quantity of carbon monoxide (CO). In general, CO is formed when combustion of carbon-containing materials is carried out with sub-stoechiometric amounts of oxygen.

It may be desirable to further increase the reducing properties of the hot gas to be used in step (iii) by adding hydrogen donor gases, such as methane or other hydrocarbons.

The process of the invention may be carried out in a cascade of at least two reactors, whereby the first reactor is used for step (ii). The first reactor may be a cyclone, in which biomass particles at high velocity are brought into contact with solid heat carrier particles.
The temperature in the first reactor suitably is maintained at 200 to 450 °C, preferably from 300 to 400 °C, more preferably from 320 to 380 °C.

In an alternate embodiment the process is carried out in a countercurrent (gas-up) downer, which is a vertical tube in which the particulate solid materials travel from top to bottom, in countercurrent with an upward flow of hot gas. The temperature near the bottom of the tube is in the range of 450 to 550 °C, preferably in the range of from 480 to 520 °C. The temperature near the top of the tube is in the range of 250 to 350 °C.

### DESCRIPTION OF ILLUSTRATIVE EMBODIMENTS

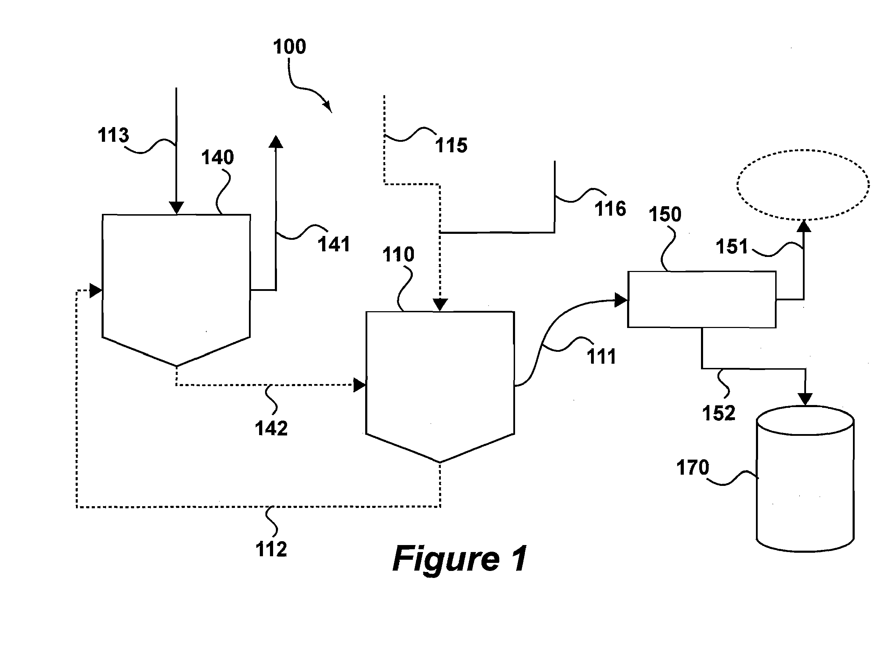

The following is a description of certain embodiments of the invention, given by way of example only and with reference to the drawings. Referring to **FIG. 1****,** a schematic representation is shown of a flash pyrolysis unit **100** representative of the prior art processes. Particulate solid biomass **115** is introduced into reactor **110,** which is kept at the desired conversion temperature, typically at or near 500 °C. An inert gas **116,** for example steam, nitrogen, or a steam/nitrogen mixture, is introduced into reactor **110,** in order to entrain gaseous reaction products **111** to condensor **150,** where condensable gases are converted to liquid bio-oil **152**. The bio-oil is separated from the non-condensable gases **151,** and sent to storage container **170.**

Solids and char **112** from reactor **110** are sent to regenerator **140,** and contacted with air **113.** The temperature in regenerator **140** typically is about 650 °C. Flue gas **141** is predominantly CO₂. Hot heat carrier particles **142** from regenerator **140** are recycled back into reactor **110.**

While still present in reactor **110,** the reaction products are exposed to the reaction temperature of (near) 500 °C. Even after reaching condensor **150** it takes some time for the temperature of the reaction products to drop below 350 °C. Consequently, the reaction products are subjected to secondary reactions, which impair the quality of bio-oil **152.**

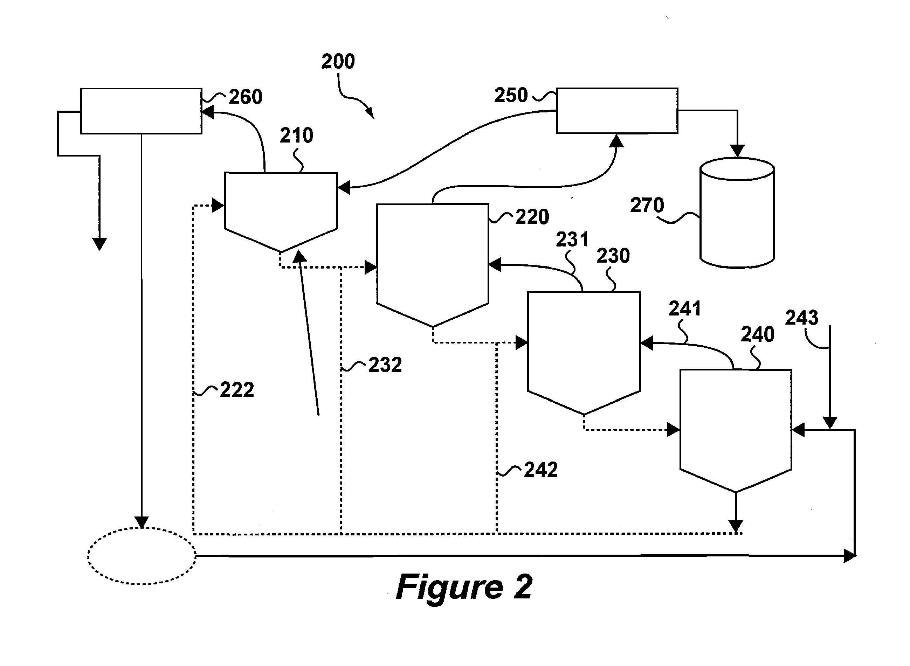

**Figure 2** shows a schematic representation of one specific embodiment of the invention. Unit **200** comprises a mechanical treatment reactor **210,** a first conversion reactor **220,** a second conversion reactor **230,** a regenerator **240,** a first condensor **250,** and a second condensor **260.**

Solid particulate biomass and solid particulate catalyst are mixed and mechanically treated in mechanical treatment reactor **210.** The mechanical treatment can be grinding, milling, kneading, and the like. It will be understood that the mechanical treatment will result in providing intimate contact between the catalyst particles and the biomass particles. The mechanical treatment reactor **210** may be operated at elevated temperature, if desired, to accomplish a partial drying of the biomass. The temperature in mechanical treatment reactor **210** maybe maintained in a range from ambient to 200 °C, preferably from 80 to 150 °C. Heat is provided by the catalyst particles, which leave regenerator **240** at a very high temperature. In particular if mechanical treatment reactor **210** is operated at the high end of the stated temperature range, some biomass conversion will take place. Gaseous products emanating from mechanical treatment reactor **210** are transferred to second condensor **260,** where non-condensable gaseous products are separated from condensable vapors (primarily water).

From mechanical treatment reactor **210** the biomass/catalyst mixture is transferred to first conversion reactor **220.** First conversion reactor **220** is operated at a temperature between 200 and 450 °C, more typically between 300 and 400 °C, preferably at or near 350 °C. Heat is provided by additional hot catalyst from regenerator **240,** as well as hot gas from second conversion reactor **230.**

Significant biomass conversion takes place in first conversion reactor **220.** Reaction products, which comprise both condensable gases and non-condensable gases, are transferred to first condensor **250.** Non-condensable gases may be used as a heat source. The condensable gases, once liquefied, form a good quality bio-oil. Desirably this bio-oil has an oxygen content lower than 25wt%, preferably lower than 15 wt%, and a Total Acid Number (TAN) lower than 30, preferably lower than 10. Importantly, the reaction products of first conversion reactor **220** never "see" a temperature higher than the operating temperature of first conversion reactor **220,** e.g., 350 °C. This is a much lower temperature than the 500 °C to which the reaction products are exposed in the prior art pyrolysis unit of Figure 1. It will be understood that the bio-oil produced in first conversion reactor **220** of Figure 2 is of significantly better quality than the bio-oil produced in reactor **110** of Figure 1, because of this temperature difference.

Solids from first conversion reactor **220** are transferred to second conversion reactor **230.** These solids consist primarily of unconverted biomass; solid biomass reaction products, including coke and char; catalyst particles; and ash.

The temperature in second conversion reactor **230** is typically maintained in the range of 400 to 550 °C, more typically in the range of from 450 to 520 °C. This higher temperature, as compared to first conversion reactor **220,** results in additional conversion of the biomass, thus ensuring an acceptable bio-oil yield. Although the quality of the bio-oil produced in second conversion reactor **230** is inferior to that produced in first conversion reactor **220,** the overall quality of the bio-oil is better than if the entire conversion is carried out at the higher temperature.

Heat is provided to second conversion reactor **230** by hot gas **241** from regenerator **240,** and by hot catalyst **242** from regenerator **240.** Reaction products from second conversion reactor **230** are transferred as hot gas **231** to first conversion reactor **220.** In the alternative, the reaction products from second conversion reactor **230** may be sent to a third condensor (not shown), if it is desired to keep the product streams from reactors **220** and **230** separate. In that case, the heat for reactor **220** is provided entirely by hot catalyst **232.**

Solids from second conversion reactor **230** are transferred to regenerator **240.** These solids consist predominantly of coke, char, catalyst particles, and ash. Coke and char are burned off in regenerator **240** by supplying an oxygen containing gas **243,** for example air. As shown in Figure 2, gaseous products from the process may be burned in regenerator **240** as well, if the heat balance of the process so requires. In most cases the amount of coke and char available to regenerator **240** is more than sufficient to provide the necessary process heat.

It may be desirable to operate regenerator 240 at a sub-stoechiometric amount of oxygen, so that hot gas **241** contains significant amounts of carbon monoxide (CO). Carbon monoxide has reducing properties, which are beneficial to the biomass conversion process. Likewise, regenerator **240** may be operated such that residual coke is present on hot catalysts **222, 232,** and **242.** The residual coke imparts reducing properties to the reaction mixtures in the various reactors.

Furthermore, hydrocarbon gases from condensors **250** and **260** may be injected into one or more reactors of the process, so as to provide hydrogen donor presence in the reaction mixtures. Each of these measures acts to reduce the oxygen content of the bio-oil produced in the process.

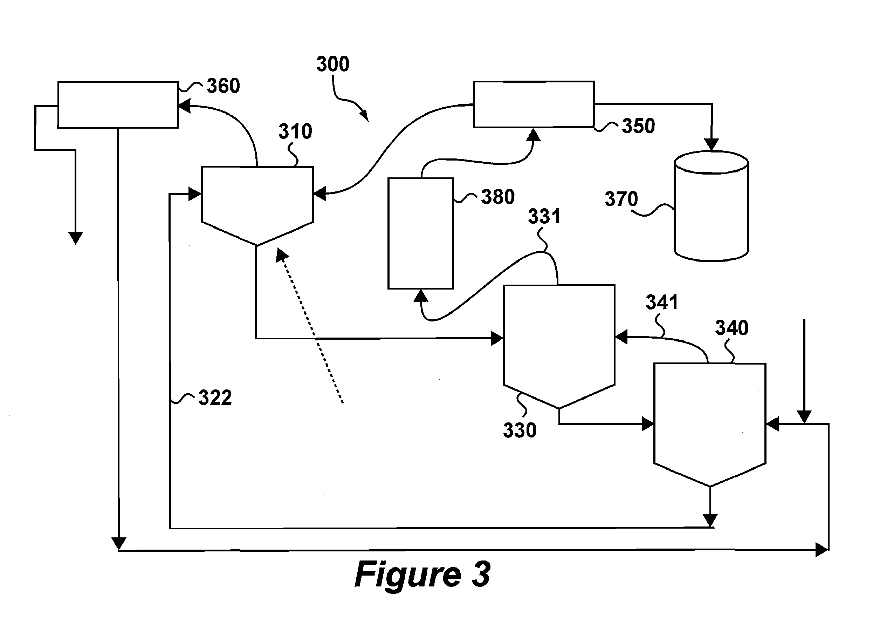

**Figure 3** shows a schematic representation of a variant of the embodiment shown in Figure 2. Unit **300** comprises a mechanical treatment reactor **310,** a first condensor **350,** and a second condensor **360.** As in the embodiment of Figure 2, regenerator **340** produces hot gas **341** and hot particulate heat carrier material **322.**

In this variant, reaction product from second conversion reactor **330** is passed through catalytic cracker **380.** The catalyst in catalytic cracker **380** is acidic in nature. Suitable examples include acidic zeolites, for example HZSM-5. The cracking reaction taking place in catalytic cracker **380** further improves the quality of bio-oil **370.** Hot gas **331** from second conversion reactor **330** is sent to catalytic cracker **380.**

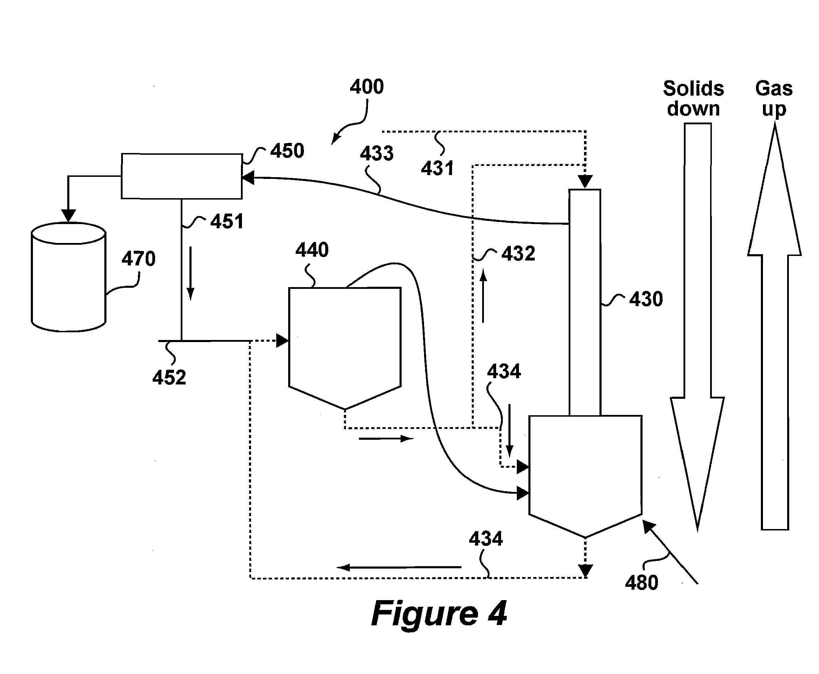

**Figure 4** shows an alternate embodiment of the process of the invention. Unit **400** comprises a countercurrent downer **430,** in which gas moves upward, and solids move downward. Biomass particles **431** are fed to downer **430** at the top, together with hot catalyst particles **432** from regenerator **440.** Downer **430** is operated such that the temperature at the bottom is at or near 500 °C; the temperature at the top of downer **430** is below 350 °C, for example 300 °C. Heat is supplied to downer **430** by hot gas **434** and hot catalyst **432.**

Gaseous and vaporized liquid reaction products are collected near the top of downer **430,** and transferred to condensor **450.** Bio-oil from condensor **450** is stored in tank **470.** Gaseous products **451** from condensor **450** are transferred to regenerator **440,** after mixing with air flow **452.**

Solid residue, consisting predominantly of catalyst particles, ash, coke and char, is collected in stripper **480.** Inert gas (not shown) is used to remove volatile reaction products from the solid residue in stripper **480.** Stripper **480** may be heated with hot catalyst from stream **434.** Coke and char are burned off the solid particles in regenerator **440.**

Ash may be separated from the solid catalyst particles leaving regenerator **440.** The ash may be used outside of the process, for example as fertilizer, or may be pelletized to the desired particle size and recycled into the process, for example mixed with hot catalyst **432.**

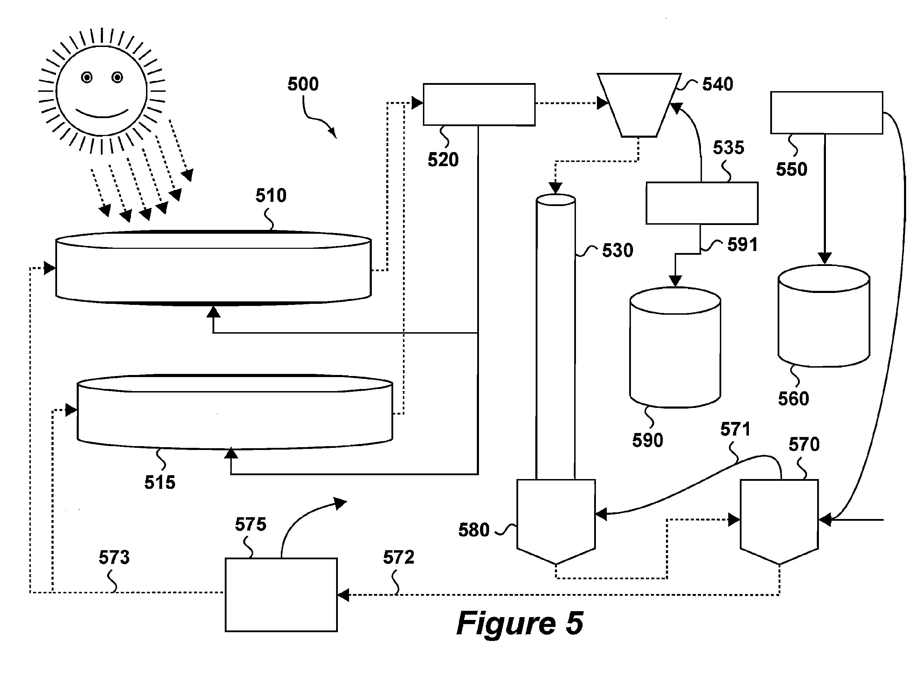

**Figure 5** shows a schematic representation of an embodiment of the invention tailored to the conversion of aquatic biomass. Unit **500** comprises countercurrent (gas up, solids down) downer **530.** Aquatic biomass is grown in pond **510.** Desirably, the aquatic biomass is grown on mineral pellets, to facilitate subsequent separation of water.

Wet aquatic biomass from pond **510** is transferred to filter **520,** where most of the water is removed. From filter **520** the aquatic biomass is transferred to drying reactor **540,** which is kept at or near 100 °C for removal of most of the residual water. Vapors from drying reactor **540** are condensed in first condensor **550.** Liquid water from first condensor **550** is stored in storage tank **560.** Water from first condensor **550** is of sufficient quality to be used for irrigation and household purposes, even cooking and drinking.

Dried aquatic biomass from drying reactor **540** is fed to the top of downer **530.** The biomass moves downward in downer **530,** in countercurrent with hot gas **571** from regenerator **570,** which is fed into the downer at stripper **580.**

Downer **530** is operated such that the temperature at the bottom is at or near 450 °C, and the temperature at the top is at or near 300 °C. It will be understood that aquatic biomass generally contains no or little lignin, and may be converted at lower temperatures than the process embodiments described herein above.

The required heat for downer **530** is supplied by hot gas **571** and, to a much lesser extent, by drying reactor **540,** which heats the biomass and the mineral particles to a temperature of approximately 100 °C. If desired additional heat may be supplied by diverting part of hot mineral particles **572** to the top of downer **530.**

As depicted, hot mineral particles from regenerator **570** are cooled in heat exchanger **575.** Heat recovered from the mineral particles may be supplied to drying reactor **540,** to downer **530,** or to pond **510,** for example.

Mineral particles **573** leaving heat exchanger **575** may be recycled to growth pond **510.** Part of the mineral particles **573** may be sent to holding tank **515,** which contains water from filter **520.** The mineral particles capture organic residue present in holding tank **515.** The mineral particles laden with organic material may be recycled to filter **520,** or to drying reactor **540.**

Gaseous and vaporized liquid reaction products from downer **530** are sent to second condensor **535,** where the vaporized liquids are condensed to bio-oil **591,** which is sent to storage tank **590.**

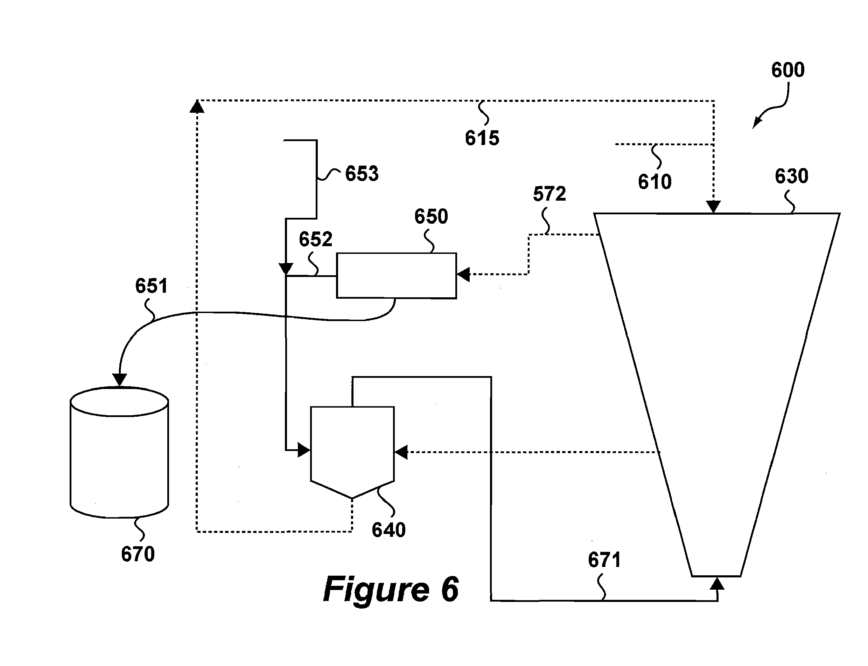

**Figure 6** shows a schematic representation of yet another embodiment of the inventive process. Unit **600** comprises a countercurrent spouted bed reactor **630.** Particulate biomass **610** is fed into reactor **630** at the top, optionally together with hot catalyst **615** from regenerator **640.**

Hot gas **671** from regenerator **640** is fed to the bottom of reactor **630.** Gaseous and vaporized reaction products **631** are transferred to condensor **650,** where vaporized reaction products are liquefied to bio-oil **651,** which is stored in storage tank **670.** Gaseous reaction products **652** are mixed with air **653,** and sent to regenerator **640.**

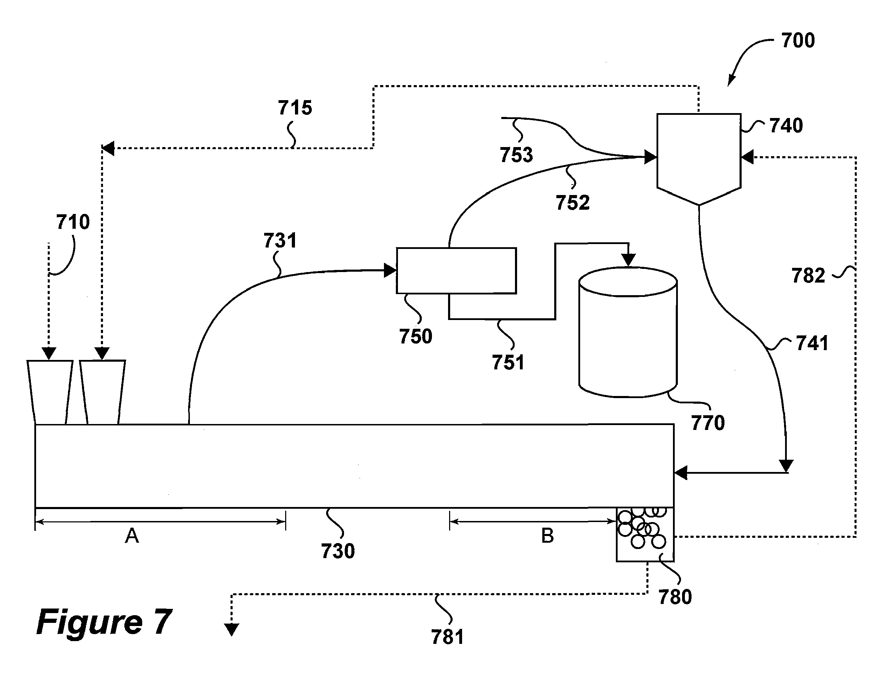

**Figure 7** shows a schematic representation of yet another embodiment of the inventive process. Unit **700** comprises an auger reactor **730.** Biomass **710** is fed into auger reactor **730** at zone **A,** together with heat carrier particles **715.** The auger screw is operated such that the biomass particles and the heat carrier particles travel from zone **A** in the direction of zone **B,** in countercurrent with hot gas **741** from regenerator **740.** The auger reactor is operated such that zone **A** is kept at or near 300 °C, and zone **B** is kept at or near 500 °C. Heat is supplied to reactor 730 by hot heat carrier particles **715** and hot gas **741.**

Gaseous and vaporized liquid reaction products are transferred to condensor **750,** where the vaporized liquid products are condensed to bio-oil **751,** which is sent to storage tank **770.**

Gaseous reaction products **752** from condensor **750** are mixed with air **753,** and sent to regenerator **740.**

Solids from auger reactor **730** are collected in separator **780,** where the solids are split into a char/ash stream **781** and a coke-laden heat carrier particle stream **782.** The latter are regenerated in regenerator **740.**

## Claims

1. A countercurrent process for the catalytic conversion of biomass material, said process comprising the steps of:
(i) providing a solid particulate biomass material;
(ii) heating the biomass material to a first temperature, T₁;
(iii) contacting the biomass material in countercurrent with a hot gas and/or hot particulate heat carrier material so as to provide a second temperature T₂, whereby T₂ > T₁.

2. The process of claim 1 wherein step (ii) comprises mixing the solid particulate biomass material with a hot heat carrier material.

3. The process of claim 1 or 2 wherein, prior to or during step (ii), the solid particulate biomass material is contacted with a catalyst.

4. The process of claim 3 wherein the catalyst is in a solid particulate form.

5. The process of claim 4 wherein the heat carrier material comprises the solid particulate catalyst.

6. The process of claim 5 wherein a mixture of solid reaction by-products and solid particulate catalyst is retrieved from the reaction mixture.

7. The process of claim 6 comprising the further step of separating the solid particulate catalyst from the solid reaction by-product.

8. The process of any one of the preceding claims comprising the further step of collecting gaseous reaction products comprising condensable and non-condensable gases, and converting the condensable gases to a liquid in a first condensor.

9. The process of claim 8 further comprising the step of combusting at least part of the non-condensable gas.

10. The process of claim 9 wherein heat generated by the combustion of the at least part of the non-condensable gas is used to heat the heat carrier material.

11. The process of claim 9 or 10 wherein at least part of the flue gas produced in the combustion of the at least part of the non-condensable gas is used as the hot gas in step (iii).

12. The process of claim 11 wherein flue gas is separated from the heat carrier material in a cyclone.

13. The process of claim 11 or 12 wherein the flue gas comprises CO.

14. The process of any one of the preceding claims which is carried out in a cascade of at least two reactors.

15. The process of claim 14 wherein the first of the cascade of reactors is a cyclone.

16. The process of claim 15 wherein, in the first reactor, biomass particles are brought into contact at high velocity with solid heat carrier particles.

17. The process of claim 15 or 16 whereby the first reactor is operated at a temperature in the range of from 100 to 180 °C, preferably from 100 to 150 °C.

18. The process of any one of claims 1 through 13 which is carried out in a series of at least two vertical tube reactors.

19. The process of any one of claims 1 through 13 which is carried out in a countercurrent auger reactor.

20. The process of any one of claims 1 through 13 which is carried out in a series of vertical tube reactors.

21. An apparatus for carrying out the process of any one of claims 1 through 13, said apparatus comprising (i) a first reactor operated at a temperature in the range of from 100 to 180 °C, wherein biomass particles are mixed with catalyst particles; (ii) a second reactor operated at a temperature in the range of 250 to 400 °C; a third reactor operated at a temperature in the range of from 400 to 550 °C.
